# EUROPEAN PATENT APPLICATION

(11) **EP 4 474 438 A1**
(43) Date of publication of application: **11.12.2024**
(21) Application number: 23177940.6
(22) Date of filing: 07.06.2023
(51) Int. Cl.: C09D 11/52, C09D 11/037, C09D 11/14, C09D 11/102, C09D 11/033, C09D 11/104

(54) **HIGHLY CONDUCTIVE SILVER INK**

(71) Applicant: Henkel AG & Co. KGaA, 40589 Düsseldorf (DE)
(72) Inventor: Negele, Carla, 41472 Neuss (DE); Oldenzijl, Rudolf, 9601 Hoogezand (NL); Abdilla, Ria, 9641EN Veendam (NL); Goethel, Frank, 09125 Chemnitz (DE)

(57) **Abstract**

The present invention relates to an electrically conductive ink comprising a) silver platelets, b) a solvent, and c) a chloride free resin having a molecular weight of less than 50000 g/mol, wherein the molecular weight is measured with gel permeation chromatography (GPC) using polystyrene calibration standards according to ASTM 3536. The ink is suitable for use in printed electronics applications.

## Description

### Technical field

The present invention relates to an electrically conductive ink comprising silver platelets, a solvent, and a chloride free resin having a molecular weight of less than 50000 g/mol. The electrically conductive ink has high conductivity and is suitable for use in printed electronics applications.

### Background of the invention

Electrically conductive inks are widely used in the various applications including printed electronics. Ordinary electrically conductive inks comprise conductive fillers dispersed in a solvent-resin system. The components in these ordinary electrically conductive inks are traditional in a sense that the used conductive fillers are metal based, and used solvents and resins are petrol based.

A highly conductive silver ink suitable for screen printing application typically contains high silver loading (≥70 wt%). In order to achieve lowest attainable resistivity, the printed sheets need to be dried at high temperature (> 150 °C) for a defined period of time to allow the sintering process of the silver particles to take place. The sintering results in an excellent resistivity, however, the products are brittle and less flexible. Further, high drying temperature means high energy consumption, and therefore, higher process costs.

Generally, it is difficult to replace metal fillers such as silver with a bio-based alternative, such as carbon as a conductive filler, while maintaining high conductivity. However, one way to provide more environmentally responsible silver ink is to use a recycled silver.

Other approach is to substitute the petroleum-based solvents with their bio-based alternatives. Evidently, water is the most sustainable and green solvent available, and water-based carbon inks are widely available commercially. There are also some water-based silver inks available, however their use and/or application is limited. One of the main reasons for this is a low boiling point of water causing too fast drying of the ink and making it difficult to handle. In a case of screen-printing application, it may even lead to a clogged screen.

Another approach is to substitute the petroleum-based resins with their bio-based alternatives. Several commercial silver inks use petrol-based, halogenated resins such as polyvinylidene fluoride (PVDF), polytetrafluoroethylene (PTFE/teflon), polyvinyl chloride (PVC), nafion and polyvinylidene chloride (PVDC). The use of PVDC has raised environmental concerns due to chlorine contributions to climate change and environmental degradation. As such, replacing these resins with the bio-based alternatives could improve the sustainability aspect and health related issues of the silver ink. However, high conductivity is often achieved by using chlorinated resin such as PVDC, and therefore, the replacement is not a straightforward task.

Therefore, there is a need for an electrically conductive ink which is more environmentally friendly while providing high conductivity and other required characteristics of a highly electrically conductive ink.

### Short summary of the figures

Figure 1 illustrates viscosity comparison between the inks according to the present invention and comparative examples.
Figure 2 illustrates sheet resistance comparison between the inks according to the present invention and comparative examples.
Figure 3 illustrates the track resistance change of the film over time and condition.
Figure 4 illustrates the stability of formula 3 at the simulated 85°C/85 relative humidity (RH) environment.

### Summary of the invention

The present invention relates to an electrically conductive ink comprising a) silver platelets, b) a solvent, and c) a chloride free resin having a molecular weight of less than 50000 g/mol, wherein the molecular weight is measured with gel permeation chromatography (GPC) using polystyrene calibration standards according to ASTM 3536.

The present invention also relates to a film, comprising a substrate and an electrically conductive ink according to the present invention.

The present invention encompasses a method of forming the film according to the present invention, comprising steps of a) providing a substrate; b) printing, preferably screen printing or flexoprinting the electrically conductive ink according to present invention onto a surface of the substrate; and c) drying and/or curing the electrically conductive ink.

The present invention also encompasses use of the electrically conductive ink according to the present invention in printed electronics applications.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, the term *"bio-based'* refers to a material that is wholly or partly derived from materials of biological origin, excluding materials embedded in geological formations and/or fossilised.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to an electrically conductive ink comprising a) silver platelets, b) a solvent, and c) a chloride free resin having a molecular weight of less than 50000 g/mol, wherein the molecular weight is measured with gel permeation chromatography (GPC) using polystyrene calibration standards according to ASTM 3536.

The electrically conductive ink according to the present invention is formulated without chlorinated resin which is often used to obtain highly conductive composition. Further, the inks according to the present invention may also contain bio-based material; the resin and the solvent may be bio-based material instead of ordinary petrol-based material. These formula changes have also allowed to reduce the quantity of the silver platelets. While the quantity of biobased material has increased, and the quantity of silver platelets has decreased, the electrically conductive ink according to the present invention has maintained high conductivity and excellent resistance even in harsh conditions. The ink according to the present invention also has a good printability because the viscosity of the ink is highly suitable for screen printing and flexoprinting techniques.

The electrically conductive ink according to the present invention comprises silver platelets.

Preferably, the silver platelets are coated with a lubricant or a capping agent, such as a fatty acid, which protect the silver platelets from oxidation and also act as a stabilizing agent to prevent particle aggregation.

Suitable silver platelets for use in the present invention have an average particle size D₅₀ of from 0.2 to 4.0 µm, wherein particle size D₅₀ value is measured by laser diffractometry, preferably from 0.5 to 3.0 µm, more preferably from 0.75 to 2.0 µm, and even more preferably from 0.95 to 1.0 µm.

Above defined particle size ranges are preferred because smaller particle size may lead to a high viscose ink causing difficulties in printing process, whereas larger particle size may lead low coverage causing poor conductivity and rougher, less smooth surface.

As used herein, the term "average particle size" refers to the D₅₀ value of the cumulative volume distribution curve at which 50% by volume of the particles have a diameter less than said value. The average particle size is measured in the present invention through laser diffractometry preferably using Microtrac S3000/S3500 available from Microtrac MRB. In this technique, the size of particles in suspensions or emulsions is measured using the diffraction of a laser beam, based on application of Mie theory. In the present invention, Mie theory or a modified Mie theory for non-spherical particles is applied and the particle sizes relate to scattering measurements at an angle from 0.02 to 135 degrees relative to the incident laser beam.

Suitable silver platelets for use in the present invention have a specific surface area of from 0.7 to 4.0 m²/g, wherein the specific surface area is measured according to ASTM B922-10 using nitrogen as an analysis gas, preferably from 0.8 to 3.0 m²/g, more preferably from 0.85 to 2.0 m²/g, and even more preferably from 0.9 to 1.0 m²/g.

Above defined specific surface area ranges are preferred because they provide ideal viscosity and conductivity for the ink according to the present invention.

Suitable commercially available silver platelets for use in the present invention include but are not limited to S0010 NM from Ames Goldsmith and LM1 from Tokusen Kogyo.

The silver platelets may be present in an electrically conductive ink according to the present invention in a quantity from 50 to 80 wt.% by weight based on the total weight of the composition, preferably from 53 to 78 wt.%, and more preferably from 55 to 75 wt.%.

Above defined quantities are preferred because they provide ideal conductivity for the ink according to the present invention. If the silver quantity is less than 50% this may lead to a poor coverage and poor conductivity, whereas higher quantity than 80% quantity may lead to poor adhesion properties and too viscose ink causing difficulties in printing process.

The electrically conductive ink according to the present invention comprises a solvent. The solvent acts as a carrier and aids the application of the ink composition onto a substrate. The solvent is evaporated during the drying procedure resulting an electrically conductive printed layer.

The suitable solvent may be a petrol-based solvent or a bio-based solvent or a mixture thereof. Preferably, the solvent used in the present invention is a bio-based solvent.

Preferably the solvent has a boiling point above 180°C. Higher boiling points are desired as the ink does not dry too fast and block the screen. However, it is not desirable to use solvents having extreme high boiling points due the fact that extreme high boiling points lead equally unwanted extreme long drying time.

Preferably, the solvent is selected from the group consisting of 2-butoxyethyl acetate, dibasic esters, dibasic ester mixture of dimethyl glutarate and dimethyl succinate (DBE-9), dihydrolevuglocosenone, n-butyl-L-lactate, 2-ethylhexyl L-lactate, glycol ethers, ethylene glycol, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, water, and mixtures thereof.

Particularly suitable solvents for screen printing are preferably selected from the group consisting of 2-butoxyethyl acetate, 2-butoxyethanol, 2-(2-butoxyethoxy)ethanol, [2-(2-butoxyethoxy)-ethyl]acetate, dimethyl succinate, dimethyl glutarate, dimethyl adipate, acetic acid, dipropylene glycol (mono)methyl ether, glycol ethers and mixtures thereof, preferably selected from 2-butoxyethyl acetate, 2-butoxyethanol, dibasic esters and mixtures thereof.

Above mentioned solvents are preferred because they dissolve the resin well, are environmentally healthy and allow sufficient opening times on the screen.

Suitable commercially available solvents for use in the present invention include but are not limited to 2-butoxyethyl acetate from Sigma Aldrich, Imsol R-9 from Lemro GmbH and n-butyl-L-lactate from Corbion.

The solvent may be present in an electrically conductive ink according to the present invention from 5 to 50 wt.% by weight based on the total weight of the composition, preferably from 10 to 45 wt.%, and more preferably from 18 to 40 wt.%.

These solvent quantities are preferred because lower solvent quantity than below 5% may lead too high viscosity and the ink may not be suitable for printing, whereas, higher than 50% solvent quantity may lead too low viscosity, and the dried ink layer may be too thin.

The electrically conductive ink according to the present invention comprises a chloride free resin. The chloride free resin provides adhesion and mechanical properties for the ink composition, and in addition, the resin aids to disperse the silver platelets.

The suitable chloride free resin may be a petrol-based resin or a bio-based resin or a mixture thereof. Preferably the chloride free resin used in the present invention is a bio-based resin.

The chloride free resin suitable for use in the present invention has a molecular weight of less than 50000 g/mol, wherein the molecular weight is measured with gel permeation chromatography (GPC) using polystyrene calibration standards according to ASTM 3536.

Low molecular weight resins are preferred because they provide ideal viscosity for the ink and have good solubility to the selected solvents.

Preferably, the chloride free resin is selected from the group consisting of phenoxy resin, cellulose ester, nitro cellulose, polyester, polyester polyurethane, and mixtures thereof.

These resins are preferred because they provide good adhesion, mechanical strength and good conductivity while being halogen free resins.

Particularly preferred resins are cellulose based resins as they are bio-based resins.

Suitable commercially available chloride free resins for use in the present invention include but are not limited to CAB 381-2 from Eastman and PKHH from Gabriel.

The chloride free resin may be present in an electrically conductive ink according to the present invention from 0.5 to 10 wt.% by weight based on the total weight of the composition, preferably from 1 to 8 wt.%, and more preferably from 1.5 to 7 wt.%.

These resin quantities are preferred because lower than 0.5% quantity may lead to poor adhesion properties, whereas higher than 10% quantity may lead too high viscosity and poor conductivity.

In a highly preferred embodiment according to the present invention the solvent is a bio-based solvent.

In a highly preferred embodiment according to the present invention the chloride free resin is a bio-based resin.

In another highly preferred embodiment according to the present invention the chloride free resin is a bio-based resin, and the solvent is a bio-based solvent.

The electrically conductive ink according to the present invention may further comprise a wetting agent.

Preferably the wetting agent is selected from the group consisting of phosphoric acid ester, phosphoric acid polyester, polycarboxylic acid, polyamide amides and mixtures thereof, preferably the wetting agent is phosphoric acid polyester.

Suitable commercially available wetting agent for use in the present invention include but is not limited to Disperbyk 110 from BYK.

The wetting agent may be present in an electrically conductive ink according to the present invention, from 0.01 to 5 wt.% by weight based on the total weight of the composition, preferably from 0.01 to 2 wt.%, and more preferably from 0.05 to 1 wt.%.

These wetting agent quantities are preferred because lower than 0.01% quantity may not provide desired effect, whereas higher than 5% quantity may lead to leaching the lubricant of the silver platelets resulting agglomeration of the platelets.

The electrically conductive ink composition according to the present invention may further comprise one or more component selected from the group consisting of surface-active agents, surfactants, antioxidants, thixotropes, reinforcement fibres, silane functional perfluoro ethers, phosphate functional perfluoro ethers, titanates, waxes, phenol formaldehyde, air release agents, flow additives, adhesion promoters, rheology modifiers, and spacer beads.

These optional components may be present in an electrically conductive ink according to the present invention from 0.01 to 10 wt.% by weight based on the total weight of the composition, preferably from 0.1 to 5 wt.%, and more preferably from 0.5 to 3 wt.%.

The electrically conductive ink composition according to the present invention has a viscosity from 2000 to 80000 mPas, wherein the viscosity is measured according to ISO 3219 using a rheometer at a constant shear rate of 1.5-s with a 20 mm plate-plate configuration (0.2 mm gap, 60 sec, at 25 °C).

The electrically conductive ink composition according to the present invention has a viscosity from 3000 to 26000 mPas, wherein the viscosity is measured according to ISO 3219 using a rheometer at a constant shear rate of 15-s with a 20 mm plate-plate configuration (0.2 mm gap, 60 sec, at 25 °C).

Above viscosity range is preferred because inks having these viscosities are suitable for screen and rotary screen printing.

The electrically conductive ink composition according to the present invention has a thixotropic index from 2 to 6.

This thixotropic index range is ideal for the ink to go easily through a printing screen and cover a substrate while returning quickly to its original structure.

The electrically conductive ink composition according to the present invention has silver platelet to resin ratio from 8 to 22, preferably from 12 to 16, and more preferably 14.

This ratio ranges are the preferred because they may provide ideal sheet resistance.

The electrically conductive ink composition according to the present invention is environmentally stable. This feature is exemplified in the examples below.

The present invention also relates to a film, comprising a substrate and an electrically conductive ink according to the present invention.

Suitable substrate for use in the present invention may be selected from the group consisting of polyethylene terephthalate (PET), polyethylene naphthalate (PEN), polyimide, and thermoplastic polyurethane (TPU). Preferably the substrate is PET.

Thickness of the substate is preferably from 50 to 500 µm, preferably from 80 to 300 µm, more preferably from 100 to 200 µm, and even more preferably from 125 to 130 µm.

The film according to the present invention comprises one or more layer of the electrically conductive ink. The ink layer has preferably a thickness from 1 to 20 µm, preferably from 2 µm to 15 µm, more preferably from 4 to 10 µm.

These thicknesses are ideal and provide desired track resistance, when the ink layer is too thin this may lead to a poor track resistance, whereas too thick ink layer may lead to long drying periods.

The present invention relates to a method of forming the film according to the present invention, comprising steps of a) providing a substrate; b) printing, preferably screen printing or flexoprinting the electrically conductive ink according to present invention onto a surface of the substrate; and c) drying and/or curing the electrically conductive ink.

The present invention also relates to use of the electrically conductive ink according to present invention in printed electronics applications. Examples of the printed electronics applications are antenna application (RFID, 5G) and smart surfaces (heating surfaces), and sensors.

### Examples

### Example 1

Electrically conductive inks according to the present invention and comparative inks were prepared according to the components listed in table 1.

**Table 1**

| | Comp. formula 1 wt. % | Comp. formula 2 wt. % | Formula 1 wt. % | Formula 2 wt. % | Formula 3 wt. % | Formula 4 wt. % |
|---|---|---|---|---|---|---|
| Saran F 310 PVDC from Asehi Kasei (resin) | 5.11 | 5.11 | | | | |
| PKHH Phenoxy resin from Gabriel | | | 5.11 | 5.11 | | |
| CAB 381-2 from Eastman (resin) | | | | | 4.90 | 4.90 |
| Imsol R-9 from Lemro GmbH (solvent) | 22.75 | 22.74 | | | 26.12 | 26.12 |
| Butyl glycol acetate from Sigma-Aldrich (solvent) | | | 22.75 | 22.78 | | |
| S0010 NM2 from Ames Goldsmith (silver particles) | 71.62 | | 71.59 | | 68.44 | |
| S0010 W from Ames Goldsmith (silver particles) | | 71.62 | | 71.58 | | 68.44 |
| Disperbyk 110 from BYK (wetting agent) | 0.52 | 0.53 | 0.55 | 0.53 | 0.54 | 0.54 |
| | 100 | 100 | 100 | 100 | 100 | 100 |

In addition, commercial composition LOCTITE ECI 1011 was used as a comparative example. LOCTITE ECI 1011 comprises a chlorinated resin.

The compositions were prepared by mixing first the resin and solvent together. Subsequently silver particles and wetting agent were added into mixture and the mixture was stirred at 500 rpm for one minute, followed by stirring at 1000 rpm for 10-15 minutes. The solid content of the inks was about 73-74% and filer resin ratio 14.

Viscosity of the inks according to the present invention and comparative inks were measured on rheometer at low and high shear rate (1.5 and 15 s⁻¹ respecively). The measurement was done as the following: the viscosity was measured using the Haake RheoStress viscometer. The temperature was set at 25 °C. The sample was placed under plate spindle (d=20 mm, titanium). Measurement was done at low (1.5/s) and high (15/s) shear rate for 60s each. For each shear values, 100 data points were collected. The measurement was done twice and the average data was reported. Thixotropic index (Tl) is defined as the ratio of the low shear viscosity and the high shear viscosity.

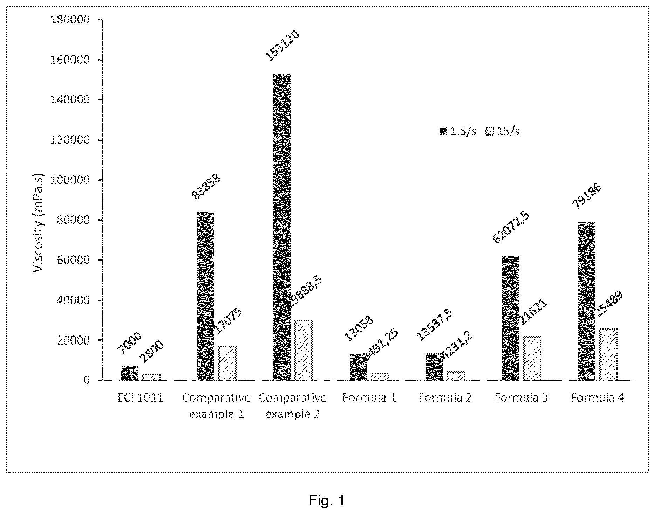

Further, the viscosity of a (commercial) highly conductive silver ink, LOCTITE ECI 1011 was measured. The results are illustrated in Figure 1. As illustrated in Figure 1, LOCTITE ECI 1011 has thixotropic index of 2.5. The inks accoridng to the present invention (formulas 1-4) have significantly higher viscosity. However, all the inks have good printability and highly suitable for screen printing. Moreover, the thixotropic index of formulas 1 and 2 is very close to the one from ECI 1011 (2.9 vs 2.5).

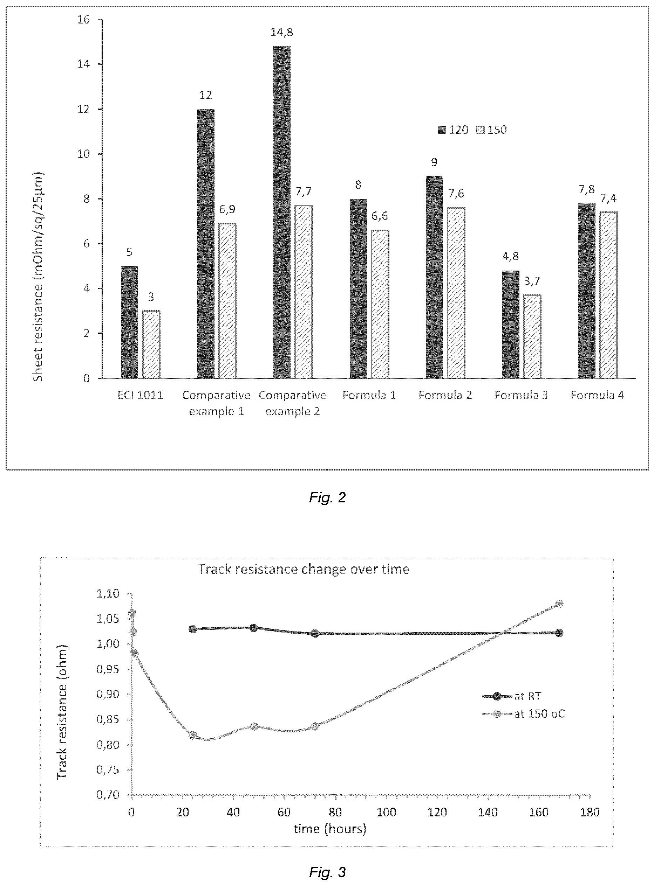

The sheet resistance of the inks according to the present invention and comparative inks were measured. For the measurement, the inks were printed onto PET substate with screen printing method using a 100T screen mesh (size approximately 250). The printed films were dried in a hot air oven at 120 and 150 °C at 2, 5 and 10 minutes. The resistance measurement were done with the four point probe multimeter. Figure 2 illustrates the sheet resistance measurements of the inks according to the present invention, comparative inks in comparison to sheet resistance of Loctite ECI 1011.

As illustrated in figure 2 formulas 3 and 4 according to the present invention provide similar result to the commercial ink LOCTIRE ECI 1011, which is known to be highly conductive.

Formula 3 was printed to a substrate to form a film and curing temperature and time was varied. The sheet resistance was measured to these films. The results are reported in table 2 below.

**Table 2**

| Curing temperature (°C) | Curing time (min) | Rt (Ω) | t (µm) | Rp (mΩ/sq/ 25µm) |
|---|---|---|---|---|
| 120 | 2 | 1.52 | 5.11 | 6.2 |
| | 5 | 1.42 | 4.67 | 5.3 |
| | 10 | 1.28 | 4.67 | 4.8 |
| 150 | 2 | 1.28 | 4.56 | 4.7 |
| | 5 | 1.14 | 4.44 | 4.0 |
| | 10 | 1.02 | 4.56 | 3.7 |

The sheet resistance values are good but the data shows improvement with a higher temperature and a longer cure time. The resistance values at lower cure temperature are already very good compared to the values of the composition comprising chlorinated resin.

Comparative formula 1 was printed onto a substrate to form a film. The cure temperature and time was varied. The sheet resistance was measured for these films. The results are reported in table 3 below.

**Table 3**

| Curing temperature (°C) | Curing time (min) | Rt (Ω) | t (µm) | Rp (mΩ/sq/ 25µm) |
|---|---|---|---|---|
| 120 | 2 | 2.52 | 7.67 | 15.5 |
| | 5 | 2.22 | 7.56 | 13.4 |
| | 10 | 1.92 | 7.78 | 12.0 |
| 150 | 2 | 1.33 | 7.67 | 8.2 |
| | 5 | 1.17 | 7.78 | 7.3 |
| | 10 | 1.11 | 7.78 | 6.9 |

Comparative formula 1 contains chlorinated resin and provides good sheet resistance as seen in table 3 above, however, formula 3, which is according to the present invention provides better performance as can be seen in table 2.

The printed film of formula 3 was further observed over time to see the changes in the resistance. The film was also subjected into aging test (at 150 °C) to evaluate its stability in harsher conditions. Figure 3 illustrates the track resistance change of the film over time and condition.

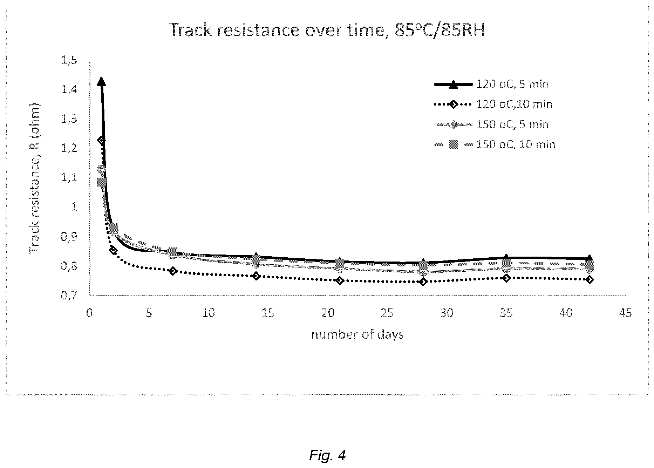

Additionally, the stability of formula 3 was also evaluated at the simulated 85°C/85 relative humidity (RH) environment. The results are illustrated in figure 4. Evidently, formula 3 was highly stable. At room temperature, hardly any changes in the resistance were observed. In the aging test at 150 °C, significant drop in the resistance were observe in the beginning of the test. This is likely due to more removal of the resin and/or sintering of the silver. After 72h, the resistance notably increased due to the structural degradation of the printed film. However, the increased is resistance after 7 days is less than 5% (compared to the initial), indicating that the ink is highly stable at elevated temperature. Similar tendency was also observed on the 85 °C/85 RH evaluation where the resistance initially decreased in the beginning phase before finally level off after 10 days. The decreased might be the results of further drying of the film, where the remaining trapped solvent finally removed and further aligning of the silver particle. Formula 3 seems to be able to withhold its final resistance (about 0.79 ohm in average) for more than 1000 hours.

### Example 2

Electrically conductive ink according to the present invention was prepared according to the components listed in table 4.

**Table 4**

| | Formula 5 |
|---|---|
| | wt. % |
| CAB 381-2 from Eastman (resin) | 4.90 |
| Purasolv BL from Corbion (solvent) | 26.12 |
| S0010 NM2 from Ames Goldsmith (silver particles) | 68.44 |
| Disperbyk 110 from BYK (wetting agent) | 0.54 |
| | 100 |

The composition was prepared as described in example 1.

The sheet resistance of formula 5 was measured. For the measurement, the ink was printed onto PET substate with screen printing method using a 100T screen (mesh size approximately 250). The printed films were dried in a hot air oven at 120 and 150 °C at 2, 5 and 10 minutes. The resistance measurement was done with the four point probe multimeter. Table 5 below reports the sheet resistance measurements results.

**Table 5**

| Curing temperature (°C) | Curing time (min) | Rt (Ω) | t (µm) | Rp* (mΩ/sq/ 25µm) |
|---|---|---|---|---|
| 120 | 2 | 1.630 | 5.4 | 7.1 |
| | 5 | 1.511 | 4.8 | 5.8 |
| | 10 | 1.462 | 5.1 | 6.0 |
| 150 | 2 | 1.352 | 4.9 | 5.3 |
| | 5 | 1.078 | 4.9 | 4.2 |
| | 10 | 0.970 | 4.9 | 3.8 |

The results indicate that change of the petrol-based solvent to a green solvent does not have an effect to the performance.

### Example 3

Electrically conductive inks according to the present invention were prepared according to the components listed in table 6.

**Table 6**

| | Formula 6 | Formula 7 |
|---|---|---|
| | wt.% | wt.% |
| S0010 NM2 from Ames Goldsmith and LM1 from Tokusen Kogyo 7:3 ratio (silver particles) | 67.99 | 68.71 |
| CAB 381-2 from Eastman (resin) | 4.85 | 4.29 |
| Imsol R-9 from Lemro GmbH (solvent) | 25.48 | 22.54 |
| Disperbyk 110 from BYK (wetting agent) | 0.51 | 0.53 |
| 2-butoxyethyl acetate | 1.17 | 3.92 |
| | 100 | 100 |

The compositions were prepared by mixing first the resin and solvent together. Subsequently silver particles and wetting agent were added into mixture and the mixture was stirred at 500 rpm for one minute, followed by stirring at 1000 rpm for 10-15 minutes. The solid content of the inks was about 73% and filer resin ratio 14.

The sheet resistance of formulas 6 and 7 was measured. For the measurement, the ink was printed onto PET substate with screen printing method using a 100T screen (mesh size approximately 250). The printed films were dried in a hot air oven at 120 and 150 °C at 2, 5 and 10 minutes. The resistance measurement was done with the four point probe multimeter. Table 7 below reports the sheet resistance measurements results.

**Table 7**

| | | Formula 6 | | | Formula 7 | | |
|---|---|---|---|---|---|---|---|
| Curing temperature (°C) | Curing time (min) | Rt (Ω) | t (µm) | Rp (mΩ/sq/ 25µm) | Rt(Ω) | t (µm) | Rp (mΩ/sq/ 25µm) |
| 120 | 2 | 1.40 | 5.17 | 5.79 | 1.45 | 5.67 | 6.55 |
| | 5 | 1.27 | 6.00 | 6.11 | 1.28 | 5.83 | 5.99 |
| | 10 | 1.17 | 5.50 | 5.13 | 1.11 | 6.17 | 5.46 |
| 150 | 2 | 1.19 | 5.83 | 5.55 | 1.08 | 6.50 | 5.59 |
| | 5 | 1.08 | 5.17 | 4.46 | 1.01 | 6.00 | 4.84 |
| | 10 | 1.00 | 6.00 | 4.78 | 0.91 | 6.33 | 4.61 |

### Example 4

Electrically conductive inks according to the present invention were prepared according to the components listed in table 8.

**Table 8**

| | Formula 8 | Formula 9 |
|---|---|---|
| | wt. % | wt% |
| PKHH Phenoxy resin from Gabriel | 5.11 | 5.11 |
| Imsol R-9 from Lemro GmbH (solvent) | 23.26 | 23.27 |
| S0010 NM2 from Ames Goldsmith (silver particles) | 71.63 | |
| S0010 W from Ames Goldsmith (silver particles) | | 71.62 |
| | 100 | 100 |

The compositions were prepared by mixing first the resin and solvent together. Subsequently, a predetermined amount of the resin-solvent mixture is added to suitable container and stirred lightly with a propeller mixer. Into the mixture, the silver platelets were gradually added. The ratio of silver platelets and resin was set at 14. The mixture was subsequently stirred at 500 rpm for one minute, and at 1000 rpm for 10-15 minutes. The solid content of the formulas was about 77%. Viscosity of formulas 8 and 9 were measured on rheometer (Haake Rheostress) according to the previously described method. The values at low and high shear rate (1.5 and 15 s⁻¹ respectively) were 45881 and 7953 mPa.s (for formula 8) and 52540 and 9629 mPa.s (for formula 9).

The sheet resistance of formulas 8 and 9 were measured following the method described in Example 1. The table 9 below shows the resistance values for formulas 8 and 9.

**Table 9**

| Curing temperature (°C) | Curing time (min) | Formula 8 | | | Formula 9 | | |
|---|---|---|---|---|---|---|---|
| | | Rt (Ω) | t (µm) | Rp* (mΩ/sq/ 25µm) | Rt (Ω) | t (µm) | Rp* (mΩ/sq/ 25µm) |
| 120 | 2 | 2.58 | 5.44 | 11.24 | 4.16 | 6.44 | 21.5 |
| | 5 | 2.34 | 5.78 | 10.82 | 3.78 | 6.22 | 18.8 |
| | 10 | 2.00 | 5.67 | 9.07 | 3.38 | 6.33 | 17.1 |
| 150 | 2 | 2.19 | 5.44 | 9.53 | 3.52 | 6.11 | 17.22 |
| | 5 | 1.79 | 5.56 | 7.94 | 2.93 | 6.22 | 14.61 |
| | 10 | 1.59 | 5.56 | 7.05 | 2.56 | 6.56 | 13.44 |

## Claims

1. An electrically conductive ink comprising
a) silver platelets,
b) a solvent, and
c) a chloride free resin having a molecular weight of less than 50000 g/mol,
wherein the molecular weight is measured with gel permeation chromatography (GPC) using polystyrene calibration standards according to ASTM 3536.

2. The electrically conductive ink according to claim 1, wherein the silver platelets have an average particle size D₅₀ of from 0.2 to 4.0 µm, wherein particle size D₅₀ value is measured by laser diffractometry, preferably from 0.5 to 3.0 µm, more preferably from 0.75 to 2.0 µm, and even more preferably from 0.95 to 1.0 µm.

3. The electrically conductive ink according to claim 1 or 2, wherein the silver platelets have a specific surface area of from 0.7 to 4.0 m²/g, wherein the specific surface area is measured according to ASTM B922-10 using nitrogen as an analysis gas, preferably from 0.8 to 3.0 m²/g, more preferably from 0.85 to 2.0 m²/g, and even more preferably from 0.9 to 1.0 m²/g.

4. The electrically conductive ink according to any one of claims 1 to 3, wherein the silver platelets are present from 50 to 80 wt.% by weight based on the total weight of the composition, preferably from 53 to 78 wt.%, and more preferably from 55 to 75 wt.%.

5. The electrically conductive ink according to any one of claims 1 to 4, wherein the solvent is selected from the group consisting of 2-butoxyethyl acetate, dibasic esters, dibasic ester mixture of dimethyl glutarate and dimethyl succinate, dihydrolevuglocosenone, n-butyl-L-lactate, 2-ethylhexyl L-lactate, glycol ethers, ethylene glycol, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, water, and mixtures thereof.

6. The electrically conductive ink according to any one of claims 1 to 5, wherein the solvent is present from 5 to 50 wt.% by weight based on the total weight of the composition, preferably from 10 to 45 wt.%, and more preferably from 18 to 40 wt.%.

7. The electrically conductive ink according to any one of claims 1 to 6, wherein the chloride free resin is selected from the group consisting of phenoxy resin, cellulose ester, nitro cellulose, polyester, polyester polyurethane, and mixtures thereof.

8. The electrically conductive ink according to any one of claims 1 to 7, wherein the chloride free resin is present from 0.5 to 10 wt.% by weight based on the total weight of the composition, preferably from 1 to 8 wt.%, and more preferably from 1.5 to 7 wt.%.

9. The electrically conductive ink according to any one of claims 1 to 8, wherein the composition may further comprise a wetting agent, preferably selected from the group consisting of phosphoric acid ester, phosphoric acid polyester, polycarboxylic acid, polyamide amides and mixtures thereof, more preferably the wetting agent is phosphoric acid polyester.

10. The electrically conductive ink according to claim 9, wherein the wetting agent is present from 0.01 to 5 wt.% by weight based on the total weight of the composition, preferably from 0.01 to 2 wt.%, and more preferably from 0.05 to 1 wt.%.

11. The electrically conductive ink composition according to any one of claims 1 to 10, wherein the ink may further comprise one or more component selected from the group consisting of surface-active agents, surfactants, antioxidants, thixotropes, reinforcement fibres, silane functional perfluoro ethers, phosphate functional perfluoro ethers, titanates, waxes, phenol formaldehyde, air release agents, flow additives, adhesion promoters, rheology modifiers, and spacer beads.

12. A film, comprising a substrate and an electrically conductive ink according to any one of claims 1 to 11.

13. The film according to claim 12, comprising one or more layer of the electrically conductive ink, wherein the layer has a thickness from 4 µm to 8 µm, preferably from 4.5 µm to 7 µm.

14. A method of forming the film according to claim 12 or 13, comprising steps of
a) providing a substrate;
b) printing, preferably screen printing or flexoprinting the electrically conductive ink according to any one of the claims 1 to 11 onto a surface of the substrate; and
c) drying and/or curing the electrically conductive ink.

15. Use of the electrically conductive ink according to any of claims 1 to 11 in printed electronics applications.
